# EUROPEAN PATENT SPECIFICATION

(11) **EP 2 708 976 B1**
(45) Date of publication and mention of the grant of the patent: **02.12.2015**
(21) Application number: 13181302.4
(22) Date of filing: 22.08.2013
(51) Int. Cl.: G06F 1/16, G06F 3/0354

(54) **Display device with pen holder, electronic information board, and electronic device**
Anzeigevorrichtung mit Stifthalter, elektronische Anzeigetafel und elektronische Vorrichtung
Dispositif d'affichage avec porte-stylo, tableau d'informations électronique et dispositif électronique

(30) Priority: 13.09.2012 JP 2012202103
(43) Date of publication of application: 19.03.2014
(73) Proprietor: Ricoh Company, Ltd., Tokyo 143-8555 (JP)
(72) Inventor: Namie, Kenji, Tokyo, 143-8555 (JP)
(74) Representative: Schwabe - Sandmair - Marx

(56) References cited:
- EP-A1- 0 626 632
- US-A- 5 422 442
- US-A1- 2006 133 015

## Description

### FIELD OF THE INVENTION

The present invention relates to a display device, an electronic information board, and an electronic device.

### BACKGROUND OF THE INVENTION

What are known as "electronic information board" products have been on the market. They are large-sized displays, with a size of about 101,6 to 177,8 cm (about 40 to 70 inches), that use a liquid crystal or plasma flat panel or projector and that have a touch panel. These products are capable of, when a PC is connected thereto, enlarging and displaying the screen of the connected PC, and they are used for presentation, or the like, in the meetings of companies or administrative agencies or are used in educational agencies, or the like.

In meetings where an electronic information board is used, it is desirable to use the screen that is suitable to the occasion; therefore, the methods for changing the aspect ratio of the screen by rotating the screen, resetting the screen, or the like, have been proposed. However, there is a problem in that, for example, if the stylus for operating the touch panel is placed on the stylus placement member on which the stylus can be placed and if, in that state, the screen is rotated so that the aspect ratio of the screen is changed, it is difficult to place the stylus thereon because the angle of the stylus placement member secured to the display is changed.
For example, one possible way is to secure, instead of the stylus placement member, a stylus holder to the display, the stylus holder being configured to hold the stylus. For example, Japanese Patent Application Laid-open No. 2007-004592 discloses the structure in which a supporting member is provided in the main body housing that includes the display screen, the supporting member constituting a housing section to house the stylus and also holding both ends of the stylus housed therein. According to Japanese Patent Application Laid-open No. 2007-004592, in order to increase the degree of freedom of the end of the stylus when the stylus is accommodated or withdrawn, the middle section of the supporting member in its longitudinal direction is curved so that a large space is formed between the middle section of the stylus stored therein and the supporting member.

However, according to the method that has the structure for holding the stylus, there is a problem in that it is necessary to put the stylus into the stylus holder, or the like, each time; therefore, it is not easy to use it. That is, the low convenience of users has been the problem.

Therefore, there is a need to provide a display device, an electronic information board, and an electronic device by which the convenience of users can be improved.

A display device, in which all features of the preamble part of claim 1 are disclosed, is described in EP0626632A1.

### SUMMARY OF THE INVENTION

It is an object of the present invention to at least partially solve the problems in the conventional technology.

This object is achieved by a display device according to the enclosed independent claim.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a diagram that illustrates an example of the configuration of an information processing system according to an embodiment;
FIG. 2 is a diagram that illustrates an example of the functional configuration of an electronic information board according to an embodiment;
FIG. 3 is a diagram that illustrates an example of the hardware configuration of a contact detection device according to an embodiment;
FIG. 4 is a diagram that illustrates a state where a display unit is placed in landscape orientation;
FIG. 5 is a diagram that illustrates a state where the display unit is placed in portrait orientation;
FIG. 6 is a diagram that illustrates, when viewed from the above, a first member and a pointing member placed on the first member in a state where the display unit is placed in landscape orientation;
FIG. 7 is a diagram that illustrates, when viewed from the front, the first member and the pointing member placed on the first member in a state where the display unit is placed in landscape orientation;
FIG. 8 is a diagram that illustrates a space between a second member and a third member;
FIG. 9 is a diagram that illustrates a space between a second member and a third member;
FIG. 10 is a diagram that illustrates an example of a conventional stylus rest unit;
FIG. 11 is a diagram that illustrates, when viewed from the left side of FIG. 5, the first member and the pointing member that is supported by the first member in a standing manner in the state illustrated in FIG. 5;
FIG. 12 is a diagram that illustrates, when viewed from the front, the first member 2 and the pointing member 140 that is supported by the first member 2 in a standing manner in the state illustrated in FIG. 5;
FIG. 13 is a diagram that illustrates, when viewed from the left side of FIG. 4, the first member in the state illustrated in FIG. 4;
FIG. 14 is a diagram that illustrates, when viewed from the right side of FIG. 4, the first member in the state illustrated in FIG. 4;
FIG. 15 is a diagram that illustrates an example in which the first member is formed as a single structure;
FIG. 16 is a diagram that illustrates an example in which the first member is formed as a single structure;
FIG. 17 is a diagram that illustrates the configuration of the first member according to a modification;
FIG. 18 is a diagram that illustrates the configuration of the first member according to a modification;
FIG. 19 is a diagram that illustrates the configuration of the first member according to a modification;
FIG. 20 is a diagram that illustrates the configuration of the first member according to an embodiment,
FIG. 21 is a diagram that illustrates the configuration of the first member according to a modification; and
FIG. 22 is a diagram that illustrates the configuration of the first member according to a modification.

### DETAILED DESCRIPTION OF THE PREFERRED EMBODIMENTS

Embodiments of a display device, an electronic information board, and an electronic device according to the present invention will be explained in detail below with reference to the accompanying drawings.

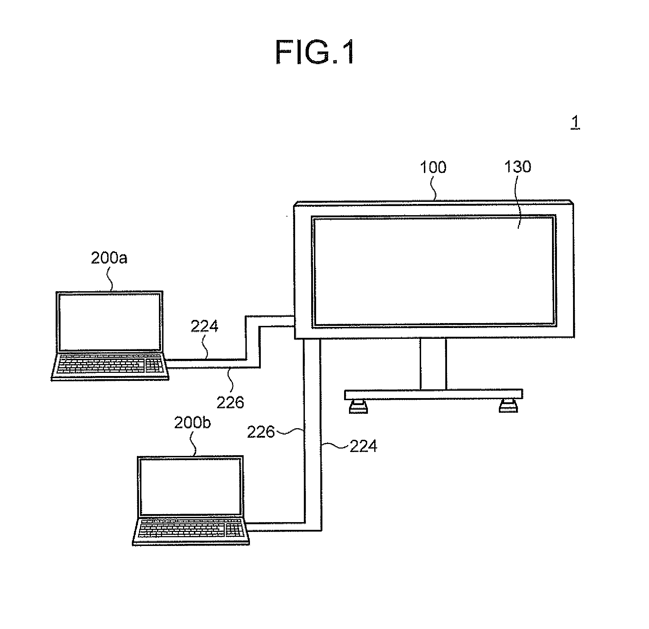

FIG. 1 is a diagram that illustrates an example of the configuration of an information processing system 1 according to the present embodiment. As illustrated in FIG. 1, the information processing system 1 includes an electronic information board 100 and user PCs 200a and 200b. The electronic information board 100 is connected to each of the user PCs 200a and 200b via cables 224 and 226.

The electronic information board 100 is a device capable of displaying the images displayed on the user PCs 200a and 200b and is capable of displaying the images generated and drawn by a user. Furthermore, the electronic information board 100 generates an event due to contact made with a display device 130 and transmits this event to the user PCs 200a and 200b as an event of an input device, such as a mouse or keyboard.

The user PCs 200a and 200b are information processing apparatuses that provide images to be displayed on the electronic information board 100. The user PCs 200a and 200b include an interface that outputs image signals so as to feed, to the electronic information board 100 at a predetermined rate (e.g., 30 frames per second), the image signals for forming the image displayed on the user PCs 200a and 200b.

In the present embodiment, the user PCs 200a and 200b include a VGA output terminal (not illustrated) as an interface so as to transmit VGA signals to the electronic information board 100 via the cable 224, such as a VGA cable. In another configuration, the user PCs 200a and 200b may transmit display images via wireless communication that is compatible with various wireless communication protocols.

Moreover, the user PCs 200a and 200b are capable of acquiring images that are displayed on the display device 130 by the electronic information board 100. The user PCs 200a and 200b include a USB port (not illustrated) so as to acquire, by using a general-purpose driver for, for example, USB Mass Storage Class, or the like, the display image that is stored in the electronic information board 100, which is connected via the cable 226 (USB cable).

In the example of FIG. 1, notebook PCs are used as the user PCs 200a and 200b; however, this is not a limitation. Information processing apparatuses, such as desktop PCs, tablet PCs, PDAs, digital video cameras, or digital cameras that are capable of feeding image frames, may be used as the user PCs 200a and 200b. Moreover, in the example of FIG. 1, the number of user PCs 200a and 200b that are used is two; however, this is not a limitation. Any number of user PCs may be connected to the electronic information board 100. For example, one user PC or three or more user PCs may be connected to the electronic information board 100.

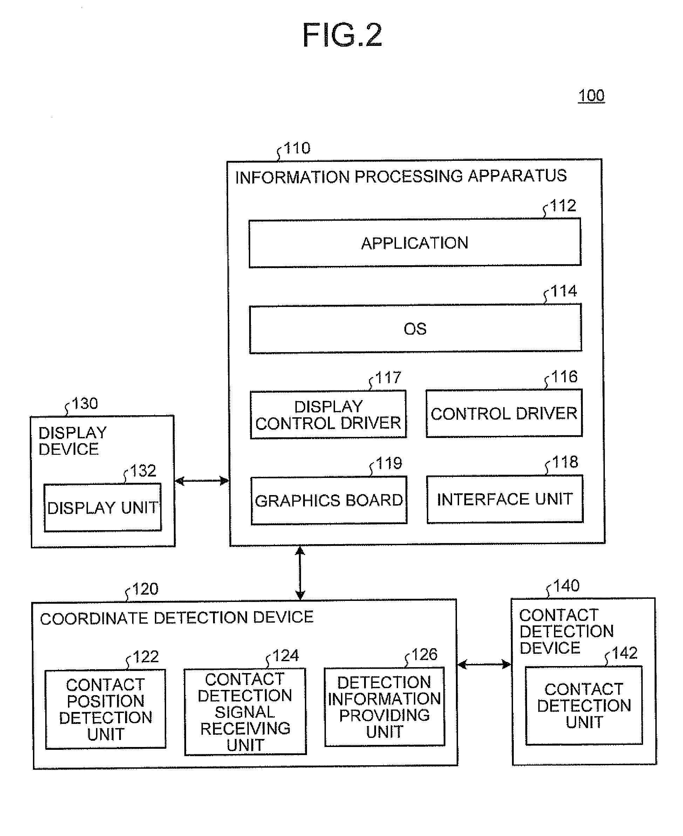

FIG. 2 is a diagram that illustrates examples of the functional configurations of an information processing apparatus 110, a coordinate detection device 120, the display device 130, and the contact detection device 140 that are included in the electronic information board 100 according to the present embodiment.

The information processing apparatus 110 is a device that controls operations of the electronic information board 100 in an integrated manner. According to the present embodiment, the information processing apparatus 110 includes a processor, such as a CPU or MPU, a ROM, and a RAM. The processor deploys a program, which is stored in the ROM, or the like, in the RAM and executes it so that various functions are performed. The programs executed by the processor may be stored in a recording medium, such as a HDD, CD-ROM, MO, flexible disks, EEPROM, EPROM, or the like, that is readable by a device, and the programs may be distributed. Furthermore, the programs may be transmitted via a network in a format readable by a different device.

In the example of FIG. 2, the information processing apparatus 110 includes an application 112, an OS 114, a control driver 116, a display control driver 117, an interface unit 118, and a graphics board 119.

The application 112 is an application program that provides images to be displayed on the coordinate detection device 120. The application 112 provides the image generated by the application 112 or the display image received from the user PCs 200a and 200b to the display control driver 117 via the OS 114 or directly so that they are displayed on the display device 130.

Moreover, the application 112 receives, from the control driver 116, events that indicate the contact, movement, or separation of the pointing member relative to the coordinate detection device 120 secured to the display device 130 or receives the positional coordinates of the pointing member, or the like, and then performs a corresponding operation. For example, if the application 112 receives an event that indicates the contact or movement of the pointing member, the application 112 changes the display color of the image displayed at the positional coordinates on the display screen of the display device 130 that correspond to the positional coordinates of the pointing member, generates the drawn image of a character, symbol, or the like, and displays it on the display device 130 via the display control driver 117. Here, the pointing member refers to a member used for pointing the positional coordinates on the display device 130, for example, the contact detection device 140, which will be described later, a stylus, or the like.

In the present embodiment, various application programs may be used, for example, text editing software such as Microsoft Word (registered trademark), spreadsheet software such as Microsoft Excel (registered trademark), presentation software such as Microsoft Power Point (registered trademark), or drawing software for drawing images on the display device 130.

The OS 114 is the operating system of the information processing apparatus 110. When the OS 114 receives a command to display an image from the application 112, the OS 114 delivers, to the display control driver 117, the display image, or the like, received from the user PCs 200a and 200b as well as the display command and causes the display device 130 to display the display image.

The control driver 116 is a functional unit that controls the coordinate detection device 120. The control driver 116 buffers, in a storage device, such as a buffer memory of the information processing apparatus 110, light block signals, the positional coordinates of the pointing member, and contact detection signals that are received from the coordinate detection device 120 and will be described later. The control driver 116 uses the light block signals, the positional coordinates of the pointing member, and the contact detection signals to perform various processes, generate various events with respect to the OS 114, and also provide the positional coordinates of the pointing member on the display screen of the display device 130.

The display control driver 117 is a functional unit that controls the graphics board 119 that controls the image displayed on a display unit (display panel) 132 of the display device 130. The display control driver 117 receives, from the application 112 or the OS 114, an image that the application 112 requests be displayed, writes the image in a video memory (not illustrated) of the graphics board 119, and causes the graphics board 119 to display the image on the display unit 132 of the display device 130.

The interface unit 118 is a functional unit that transfers data between the information processing apparatus 110 and the coordinate detection device 120. In the present embodiment, a Universal Serial Bus (USB) connector may be used as the interface unit 118. The control driver 116 is capable of acquiring various events and the positional coordinates of the pointing member from the coordinate detection device 120 via the USB cable.

The graphics board 119 is a functional unit that controls the image displayed on the display unit 132 of the display device 130. The graphics board 119 is connected to the display device 130 via a video transmission cable, such as a Video Graphics Array (VGA) cable, or the like, so as to transmit the image written in the video memory by the display control driver 117 to the display device 130 as a video signal and have it displayed thereon.

The coordinate detection device 120 is a device that is installed on the display device 130 so as to detect whether the pointing member comes close thereto or is brought into contact therewith and to detect the positional coordinates of the pointing member. The coordinate detection device 120 includes a contact position detection unit 122, a contact detection signal receiving unit 124, and a detection information providing unit 126.

The contact position detection unit 122 detects the positional coordinates of the pointing member, such as the contact detection device 140, on the display unit 132 of the display device 130. According to the present embodiment, light scanners (not illustrated) are installed in two right and left adjacent corners of the display unit 132 as in the embodiment of the coordinate detection device that is disclosed in Japanese Patent Application Laid-open No. 2008-176802. The light scanners emit light while they rotate so as to emit a light beam substantially parallel to the display surface of the display unit 132. Furthermore, the light scanners receive a light beam that is reflexively reflected by a reflection member installed on the display unit 132. The contact position detection unit 122 calculates the positional coordinates of the light-blocking point, where the light beam is blocked on the display unit 132, on the basis of the waveform data that is the result of the light received from the light scanners.

Furthermore, in accordance with changes in the intensity of the light received by the light scanners, the contact position detection unit 122 detects that the light has been blocked due to the pointing member coming close to the coordinate detection device 120. The contact position detection unit 122 generates a light block signal that indicates whether the light has been blocked or not. The light block signals as well as the positional coordinates of the pointing member, which are calculated by using the above-described method, are transmitted by the detection information providing unit 126 to the information processing apparatus 110.

The contact detection signal receiving unit 124 is a functional unit that receives a contact detection signal that indicates that the contact detection device 140 has been in contact with the coordinate detection device 120. When the contact detection signal receiving unit 124 receives a contact detection signal from the contact detection device 140, the contact detection signal receiving unit 124 notifies the detection information providing unit 126 of that information. In the present embodiment, the contact detection signal receiving unit 124 receives a contact detection signal from the contact detection device 140 via a signal line that is capable of transmitting contact detection signals; however, this is not a limitation and the contact detection signals may be received via, for example, infrared communication or wireless communication, such as Bluetooth (registered trademark).

The detection information providing unit 126 is a unit that provides detection information to the information processing apparatus 110. The detection information providing unit 126 transmits, as detection information, the light block signals, the positional coordinates of the pointing member, and the contact detection signals. According to the present embodiment, the detection information providing unit 126 simultaneously transmits the light block signals and the positional coordinates of the pointing member. Furthermore, the detection information providing unit 126 transmits the detection information on a regular basis; however, this is not a limitation and the detection information providing unit 126 may transmit the detection information when, for example, the light block signal has been received and the positional coordinates of the pointing member have been calculated or when the contact detection signal has been received from the contact detection device 140. Moreover, for example, the contact detection device 140 may directly transmit the contact detection signals to the information processing apparatus 110.

The display device 130 is a device for displaying images provided by the information processing apparatus 110. The display device 130 includes the display unit 132 that is a unit that displays the images. In the present embodiment, displays such as a plasma display, liquid crystal display, organic EL display, CRT display, or the like, may be used as the display device. The images of the display screen, or the like, displayed on the display unit 132 include a Graphical User Interface (GUI) provided by the application 112 of the information processing apparatus 110 and include drawn images, such as characters, lines, marks, patterns, or the like, generated by the application 112 using the contact position detected by the coordinate detection device 120.

The contact detection device 140 is a device that detects that contact has been made with the coordinate detection device 120. The contact detection device 140 includes a contact detection unit 142 that is a unit that detects that the contact detection device 140 has been in contact with an object. When the contact detection unit 142 detects that the contact detection device 140 has been in contact with an object, the contact detection unit 142 transmits, to the coordinate detection device 120, the contact detection signal that indicates there has been contact.

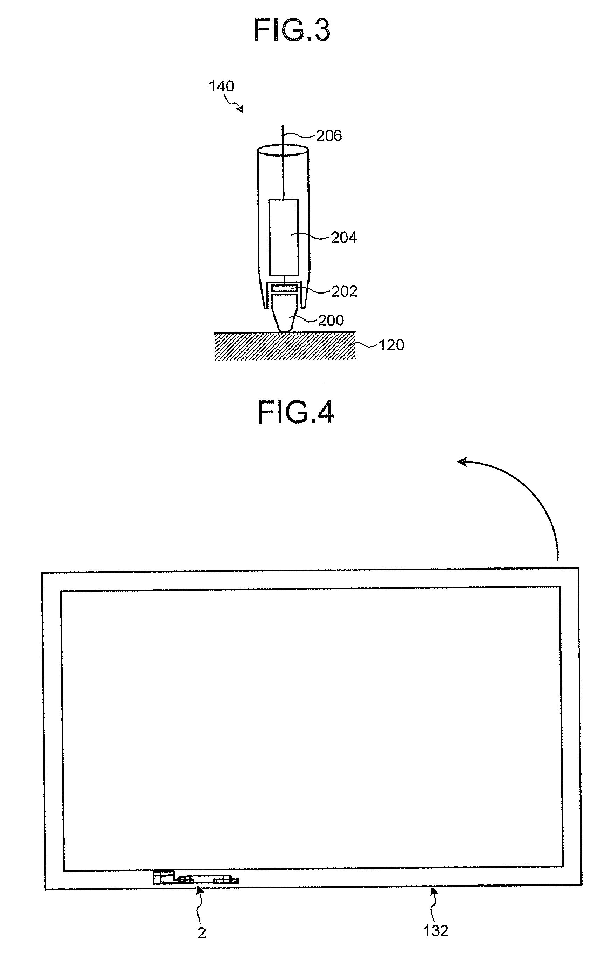

FIG. 3 is a diagram that illustrates an example of the hardware configuration of the contact detection device 140 that is the pointing member according to the present embodiment. An explanation is given below of the hardware configuration of the contact detection device 140.

The contact detection device 140 includes, as the contact detection unit 142, an end unit 200, a contact detection sensor 202, and a contact determination unit 204, and a signal line 206.

The end unit 200 is a movable member that is to be in contact with the coordinate detection device 120 mounted on the display device 130. When one end of the end unit 200 is brought into contact with an object, the end unit 200 is moved in the longitudinal direction of the contact detection device 140 so that the other end of the end unit 200 is brought into contact with the contact detection sensor 202. An elastic member (not illustrated), such as a spring, is provided between the end unit 200 and the contact detection sensor 202. When the end unit 200 is moved away from the object, the end unit 200 returns to the original position due to the elastic force.

The contact detection sensor 202 is a sensor that detects that contact has been made with the end unit 200. In the present embodiment, pressure sensors, such as FlexiForce (registered trademark) of NITTA Corporation, or INASTOMER (registered trademark) of INA-BA RUBBER Co., Ltd may be used as the contact detection sensor 202. When the end unit 200 is brought into contact with the contact detection sensor 202, the resistance of the current in the contact detection sensor 202 is changed.

The contact determination unit 204 is a unit that monitors the contact detection sensor 202 and determines whether contact has been made with the contact detection device 140. According to the present embodiment, a semiconductor circuit may be used as the contact determination unit 204. The contact determination unit 204 includes a voltage conversion circuit, an A/D conversion circuit, a memory circuit, a determination circuit, and an output circuit.

When the contact determination unit 204 detects a change in the resistance value of the contact detection sensor 202, the voltage conversion circuit converts the change in the resistance value of the contact detection sensor 202 into a voltage, and the A/D conversion circuit converts the voltage converted by the voltage conversion circuit into a pressure signal that is a digital value.

The determination circuit compares the predetermined threshold stored in the memory circuit with the pressure signal so as to determine whether the end unit 200 has been brought into contact with an object and then outputs the result of the determination. According to the present embodiment, the change in the resistance value that occurs due to the actual contact between the end unit 200 and the object is converted into a voltage, and the digitally converted value is determined to be a predetermined threshold. If the change in the resistance value is equal to or greater than the predetermined threshold, it is determined that the end unit 200 has been in contact with an object. Conversely, if the change in the resistance value is less than the predetermined threshold, it is determined that the end unit 200 has not been in contact with an object.

The output circuit outputs the determination result calculated by the determination circuit as a contact detection signal to the coordinate detection device 120 via the signal line 206. The contact detection signal contains the value that indicates that the contact detection device 140 has been in contact with an object (true) and the value that indicates that the contact detection device 140 has not been in contact with an object (false). In the present embodiment, the output circuit transmits contact detection signals on a regular basis; however, in another embodiment, only when the determination circuit determines that the end unit 200 has been in contact with an object, the contact detection signal indicating that information may be output.

Here, contact detection signals are transmitted to the coordinate detection device 120 via the signal line 206; however, this is not a limitation and the contact detection signals may be transmitted via infrared communication or wireless communication, such as Bluetooth (registered trademark). Furthermore, a configuration may be such that contact detection signals are directly transmitted to the information processing apparatus 110 via wireless communication or via a dedicated line, or the like. In the following explanation, the contact detection device 140 is referred to as the "pointing member 140".

Next, an explanation is given of the structure of the display device 130 that is included in the electronic information board 100 according to the present embodiment. Here, the display unit (display panel) 132 included in the display device 130 according to the present embodiment has a configuration such that the orientation of the screen can be changed.

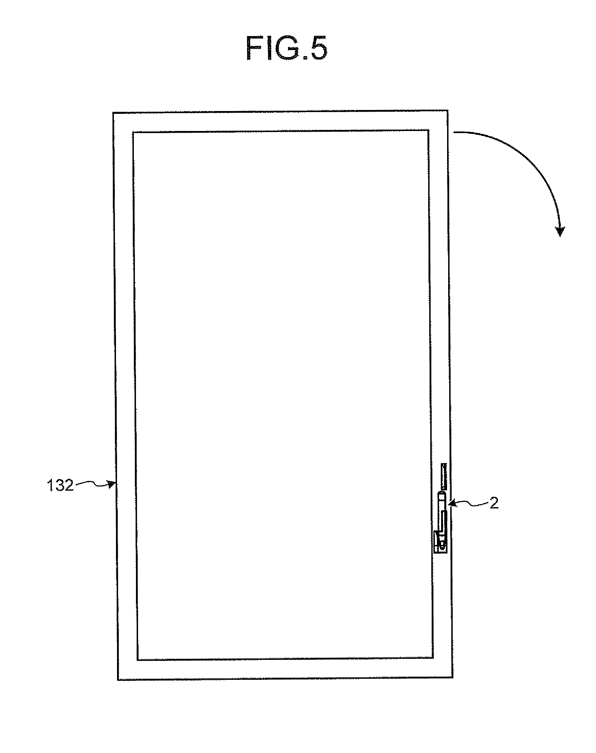

FIG. 4 is a diagram that illustrates a state where the display unit 132 is placed in landscape orientation, and FIG. 5 is a diagram that illustrates a state where the display unit 132 is placed in portrait orientation. The display unit 132 may be placed in any ways. In one way, for example, a rotation mechanism is provided at the back of the display unit 132 for its rotation so that the orientation of the screen is variably set. In another way, the place to which the display unit 132 is secured is changed so that the orientation of the screen is variably set.

Here, an explanation is given of an example of a case where the display unit 132 is rotated. In order to change the state illustrated in FIG. 4 (the state where the display unit 132 is placed in landscape orientation) to the state illustrated in FIG. 5 (the state where the display unit 132 is placed in portrait orientation), the display unit 132 itself is rotated to the left (rotated in a counterclockwise direction) and then it is locked. In order to change the portrait orientation to the landscape orientation, the display unit 132 is rotated in the direction opposite to the above-described direction and then it is locked. Various methods for rotating the display unit 132 90 degrees have been known, for example, the method disclosed in Japanese Patent No. 3702132 and the method disclosed in Japanese Patent Application Laid-open No. 2011-017738.

The electronic information board that uses the pointing member, such as a stylus, needs an area for placing or accommodating the stylus. For example, in the case of typical stylus holders, if the orientation of the display panel is changed 90 degrees, the stylus holder is vertically placed due to the changed angle; therefore, the stylus may not be placed. Hence, there have been ways: for example, to store the stylus in the panel main body side, to hold the stylus by using the holder, or to attach the stylus to the housing with the magnetic force applied to the stylus and the housing side. However, in the method of storing the stylus in the main body side, as the stylus is secured to or stored in a predetermined location, it takes a lot of trouble to withdraw the stylus. Furthermore, in the method of holding the stylus by using the holder, there is a higher possibility that the holding section is broken compared to the other methods and, because the additional operation of holding the stylus is performed to accommodate the stylus, it takes a lot of trouble for users. In the method of attaching the stylus to the housing by using the magnetic force, because it is difficult to obtain a sufficient adhesive force, there is a possibility that, when contact is made with the stylus, the stylus drops down due to its detachment and is broken.

According to the present embodiment, in order to eliminate the disadvantages of the above methods, a first member 2 is secured to the display unit 132, the first member 2 having a configuration such that it can be used as a stylus rest in the case of landscape orientation and it can be used as a stylus stand in the case of portrait orientation. Thus, users can place or withdraw the stylus without having any trouble. An explanation is given below of the specific details of the first member 2.

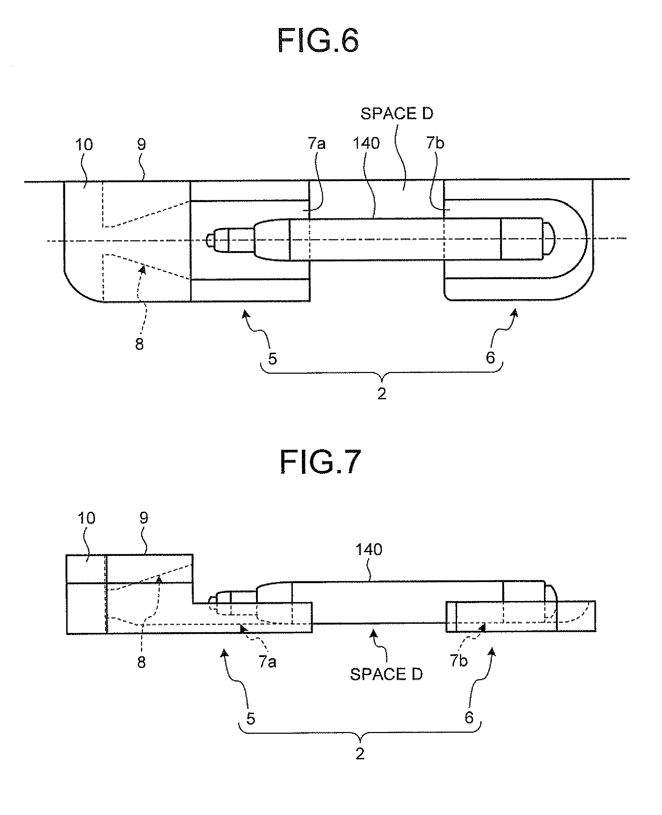

In the present embodiment, the first member 2 can be used as a stylus rest in a state where the display unit 132 is placed in landscape orientation (the state illustrated in FIG. 4). FIG. 6 is a diagram that illustrates, when viewed from the above, the first member 2 and the pointing member 140 placed on the first member 2 in a state where the display unit 132 is placed in landscape orientation. FIG. 7 is a diagram that illustrates, when viewed from the front, the first member 2 and the pointing member 140 placed on the first member 2 in a state where the display unit 132 is placed in landscape orientation.

As illustrated in FIGS. 6 and 7, the first member 2 according to the present embodiment includes a second member 5 and a third member 6. The second member 5 has a housing section 9 provided therein and includes a first placement surface 7a on which the leading end side of the pointing member 140 can be placed. The housing section 9 provided in the second member 5 has a hole 8 formed therein so that the part of the pointing member 140 including the end thereof is allowed to be inserted into the hole 8. The hole 8 may have any shape, that is, it may be circular, polygonal, or other shapes (e.g., the shape of a partially missing circle or polygon). That is, the hole 8 may have any shape if the shape allows the part of the pointing member 140 including the end thereof to be inserted into the hole 8. Furthermore, an end housing section 10 is formed inside the housing section 9 so that the end of the pointing member 140 guided through the hole 8 can be housed in the end housing section 10. The end housing section 10 is formed as a container that connects to the hole 8.

Further, the third member 6 includes a second placement surface 7b on which the end side of the pointing member 140 can be placed, the end side being opposite to the leading end of the pointing member 140. Moreover, a space D is interposed between the second member 5 and the third member 6 so that the pointing member 140 can be grasped therebetween.

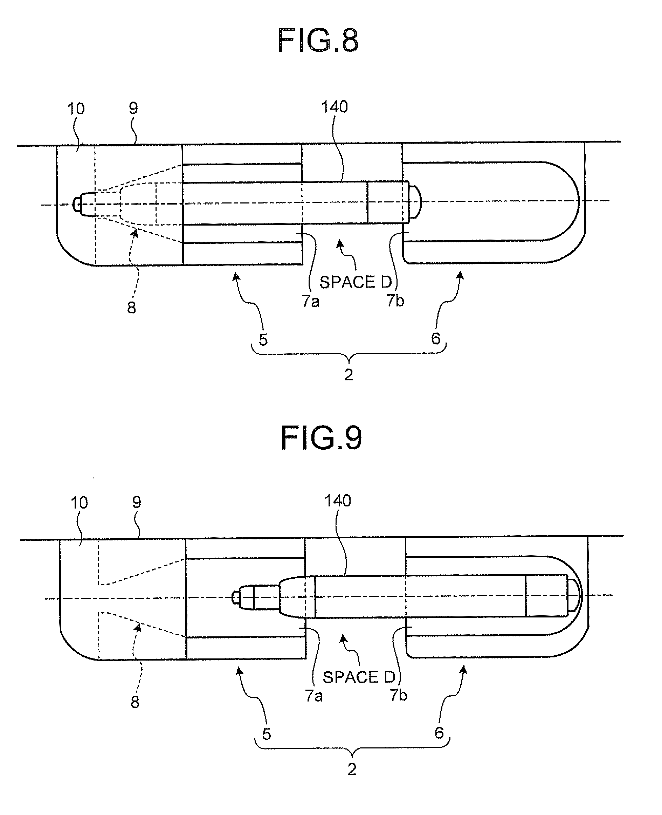

As illustrated in FIGS. 8 and 9, the size of the above-described space D is such that, even if the pointing member 140 is placed at any location on the first member 2, the pointing member 140 is located above the second member 5 and the third member 6. By having the space D, the pointing member 140 can be held, not only from the right and left, but also from below so that it can be lifted up. Furthermore, when held from above, the stylus can be tightly held. Moreover, because the pointing member 140 is located on the second member 5 and the third member 6, the pointing member 140 does not drop from the first member 2 even if the pointing member 140 is pushed down. Thus, the convenience of users is improved.

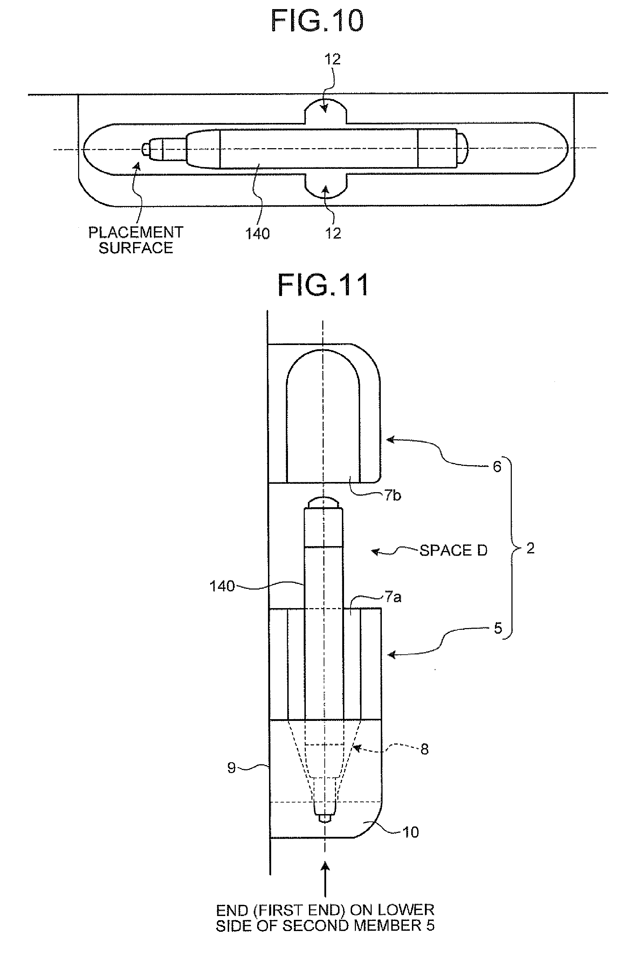

FIG. 10 illustrates an example of a conventional stylus rest. The conventional stylus rest is designed to make it easier to grip the pointing member by forming grooves 12 partially on both sides of the pointing member 140. Because the first member 2 according to the present embodiment has the above-described space D, the pointing member 140 can be held, not only from the right and left, but also from below so that it can be lifted up and, when held from above, the pointing member 140 can be tightly held; thus, its convenience is improved compared to the conventional stylus rest.

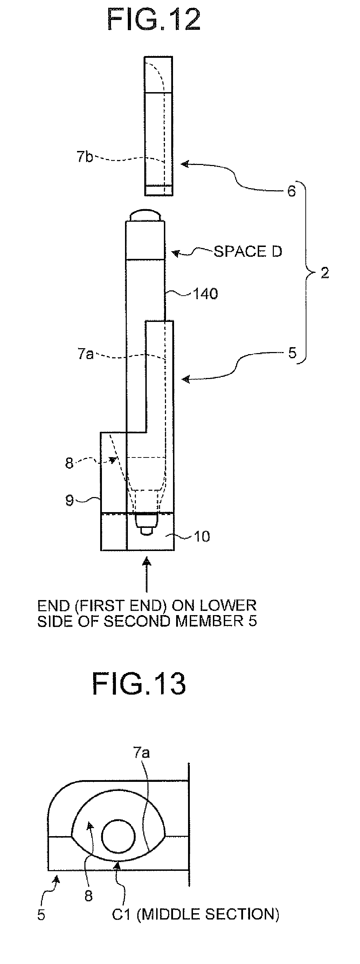

The explanation of the first member 2 according to the present embodiment continues. According to the present embodiment, the first member 2 can be used as a stylus stand in a state where the display unit 132 is placed in portrait orientation (the state illustrated in FIG. 5). FIG. 11 is a diagram that illustrates, when viewed from the left side of FIG. 5, the first member 2 and the pointing member 140 that is supported by the first member 2 in a standing manner in a state where the display unit 132 in the state illustrated in FIG. 4 is rotated 90 degrees in a counterclockwise direction so that the orientation of the screen is changed (i.e., the state where the display unit 132 is placed in the portrait orientation as illustrated in FIG. 5). FIG. 12 is a diagram that illustrates, when viewed from the front, the first member 2 and the pointing member 140 that is supported by the first member 2 in a standing manner in the state illustrated in FIG. 5.

Here, the width of the hole 8 formed in the housing section 9 becomes narrower as the position of the hole 8 comes closer to a first end, the first end being one of the ends of the first member 2 and the first end facing downward if, in a state where the pointing member 140 is placed on the placement surface (in this example, the first placement surface 7a, the second placement surface 7b), the display unit 132 is rotated so that the orientation of the screen is changed. The width of the hole 8 at a position where it is narrowest indicates a value that is between that of the width of the end of the pointing member 140 and that of the width of the middle section of the pointing member 140. In the example of FIGS. 11 and 12, the width of the hole 8 gradually becomes narrower as the downward position of the hole 8 comes closer to the downward end (the first end) of the second member 5. The width of the hole 8 at the end position (at the boundary section with the end housing section 10) indicates the value that is between that of the width of the end of the pointing member 140 and that of the width of the middle section of the pointing member 140.

Furthermore, according to the present embodiment, the placement surface (in this example, the first placement surface 7a, the second placement surface 7b) included in the first member 2 is formed such that the placement surface slopes downward toward its middle section in the direction that intersects with the direction along which the pointing member 140 is placed on the placement surface and extends thereon. More specifics will be explained below.

FIG. 13 is a diagram that illustrates, when viewed from the left side of FIG. 4, the first member 2 (the second member 5) in a state where the display unit 132 is placed in landscape orientation (the state illustrated in FIG. 4). In the example of FIG. 13, the width of the first placement surface 7a included in the second member 5 is wider than the width of the pointing member 140. The first placement surface 7a is formed such that the first placement surface 7a slopes downward toward the middle section C1 of the first placement surface 7a in the direction (the horizontal direction in FIG. 13) perpendicular to the direction along which the pointing member 140 is placed on the first placement surface 7a and extends thereon. Because the first placement surface 7a has the above form, it is possible to prevent the pointing member 140 placed on the first placement surface 7a from dropping in the front of the display unit 132. The slope form of the first placement surface 7a may be arbitrarily changed.

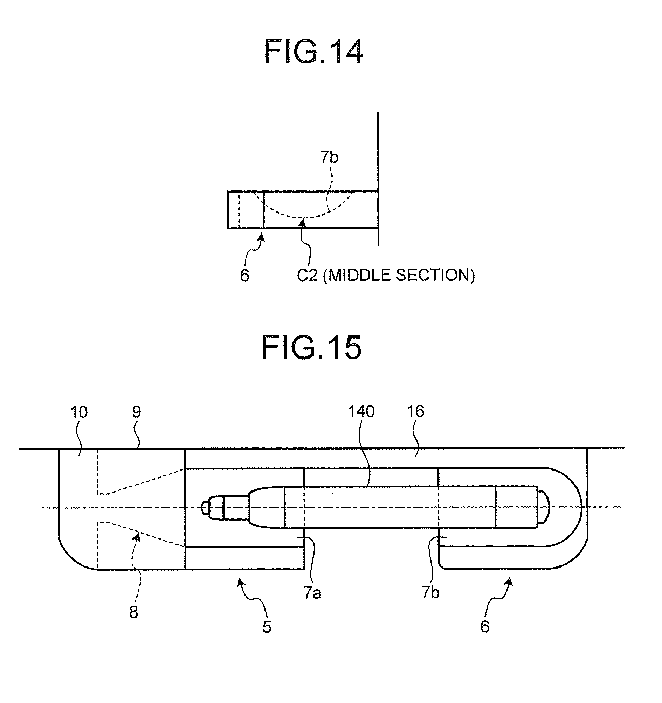

Next, an explanation is given of the form of the second placement surface 7b. FIG. 14 is a diagram that illustrates, when viewed from the right side of FIG. 4, the first member 2 (the third member 6) in a state where the display unit 132 is placed in landscape orientation (the state illustrated in FIG. 4). In the example of FIG. 14, the width of the second placement surface 7b included in the third member 6 is wider than the width of the pointing member 140. The form of the second placement surface 7b is such that the second placement surface 7b slopes downward toward the middle section C2 of the second placement surface 7b in the direction (the horizontal direction in FIG. 14) perpendicular to the direction along which the pointing member 140 is placed on the second placement surface 7b and extends thereon. Because the second placement surface 7b has the above form, it is possible to prevent the pointing member 140 placed on the second placement surface 7b from dropping in the front of the display unit 132. The slope form of the second placement surface 7b may be arbitrarily changed.

As described above, the first member 2 secured to the display unit 132 includes the placement surface (in this example, the first placement surface 7a, the second placement surface 7b) on which the pointing member 140 can be placed. The housing section 9 is provided on the first end side, the first end being one of the ends of the first member 2 and the first end facing downward if, in a state where the pointing member 140 is placed on the placement surface, the display unit 132 is rotated so that the orientation of the screen is changed. The part of the pointing member 140 including the end thereof can be housed in the housing section 9 when the pointing member 140 moves down along the tilted placement surface. For example, in a case where the state illustrated in FIG. 4 is changed to the state illustrated in FIG. 5, the pointing member 140 moves down along the tilted placement surface as the state becomes closer to the state illustrated in FIG. 5 (as the display unit 132 is rotated in a counterclockwise direction at the angle closer to 90 degrees), and the part of the moved pointing member 140 including the end thereof is inserted through the hole 8 formed in the housing section 9 and is then accommodated therein. According to the present embodiment, without touching the pointing member 140, a user can change a state where the pointing member 140 is placed on the first member 2 (the state of a stylus rest) to a state where the pointing member 140 is supported by the first member 2 in a standing manner (the state of a stylus stand); thus, the convenience of users can be improved.

### (Modification)

Modified examples and more details about the present embodiment will be explained below. The following examples may be arbitrarily combined. Furthermore, the following modifications and the above-described embodiment may be arbitrarily combined.

### Modification 1

In the above-described embodiment, the first member 2 is made up of two structures (the second member 5, the third member 6); however, this is not a limitation and, as illustrated in, for example, FIG. 15, a section 16 may be provided to connect the second member 5 and the third member 6, the section 16 having no effect in holding or placing the pointing member 140; thus, the first member 2 is formed as a single structure.

### Modification 2

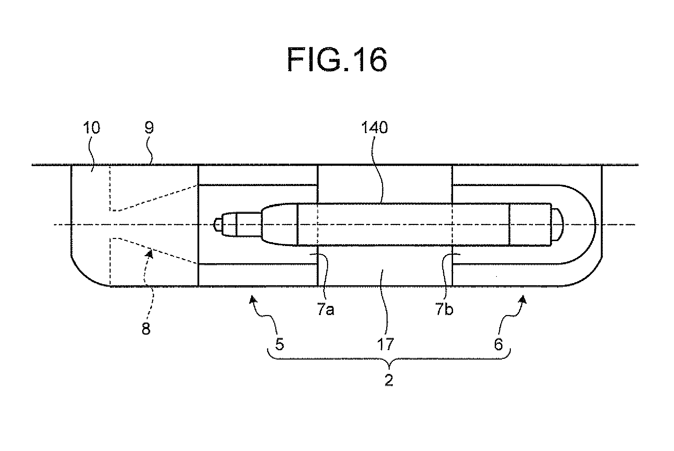

Furthermore, as illustrated in, for example, FIG. 16, the first member 2 may be formed as a single structure by connecting the second member 5 and the third member 6 via a fourth member 17. Here, a configuration may be such that the tilted structure of the second member 5 and the third member 6 is disconnected by the fourth member 17 so that the pointing member 140 can be easily grasped and placed. In the example of FIG. 16, the fourth member 17 is formed of a flat plate that is on the same level as the middle section C1 (see FIG. 13) of the first placement surface 7a of the second member 5 and as the middle section C2 (see FIG. 14) of the second placement surface 7b of the third member 6, whereby the fourth member 17 serves as a placement surface on which the pointing member 140 can be placed.

### Modification 3

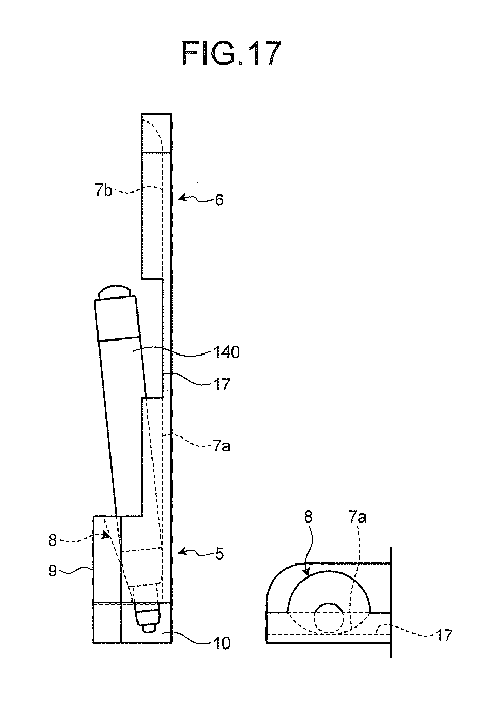

For example, the hole 8 may be formed in the housing section 9 such that, when the first member 2 serves as a stylus stand, the pointing member 140 stands in a tilted manner with respect to the placement surface. FIG. 17 is a diagram that illustrates, when viewed from the front, the state of the first member 2 and the pointing member 140 supported by the first member 2 in a standing manner in a state where the display unit 132 is placed in the portrait orientation (the state illustrated in FIG. 5) and that illustrates, when viewed from the left side of FIG. 4, the state of the first member 2 in a state where the display unit 132 is placed in the landscape orientation (the state illustrated in FIG. 4). The basic structure of the first member 2 is the same as that illustrated in FIG. 16. In the example of FIG. 17, the configuration is such that only the left side of the hole 8 gradually becomes narrower and the width of the hole 8 becomes narrower so that its width becomes a width between the width of the end of the pointing member 140 and the width of the middle section thereof; thus, the pointing member 140 can be tilted to the left when the display unit 132 is placed in the portrait orientation. As the pointing member 140 is located away from the placement surface on the right side, it is easier to grasp the pointing member 140 and the convenience of users can be improved.

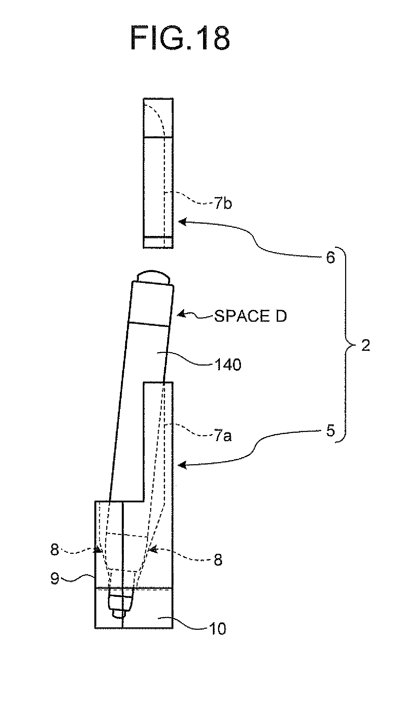

Furthermore, as illustrated in, for example, FIG. 18, the configuration is such that the direction along which the hole 8 is pierced (the direction along which it is formed) is tilted to the left and the width of the hole 8 becomes narrower so that its width becomes a width between the width of the end of the pointing member 140 and the width of the middle section thereof; thus, the pointing member 140 can be tilted to the right when the display unit 132 is placed in the portrait orientation. In this example, the basis structure of the first member 2 is the same as that in the above-described embodiment. With the configuration illustrated in FIG. 18, it is easier to put in and out the pointing member 140 through the space D between the second member 5 and the third member 6, and the convenience of users can be improved.

### Modification 4

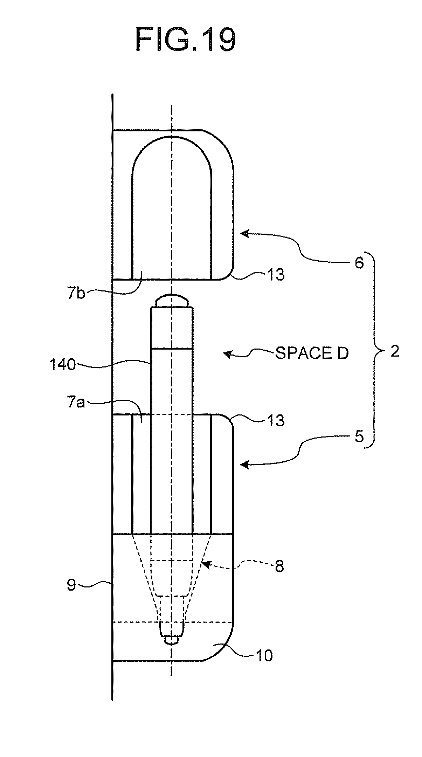

FIG. 19 is a diagram that illustrates, when viewed from the left side of FIG. 5, the first member 2 and the pointing member 140 supported by the first member 2 in a standing manner in a state where the display unit 132 is placed in the portrait orientation (the state illustrated in FIG. 5). For example, as illustrated in FIG. 19, the section of the second member 5 facing the space D and the section of the third member 6 facing the space D have a shape 13 that makes the space D larger toward the front side of the display unit 132. Because the shape 13 is provided, it is easier to put in and out the pointing member 140 when the display unit 132 is placed in the portrait orientation and the convenience of users can be improved.

### Modification 5

In the present embodiment, the hole 8 formed in the housing section 9 may pass through the housing section 9 toward the above-described first end (the first end is one of the ends of the first member 2, and the first end faces downward if, in a state where the pointing member 140 is placed on the placement surface, the display unit 132 is rotated so that the orientation of the screen is changed). More specifics will be described below.

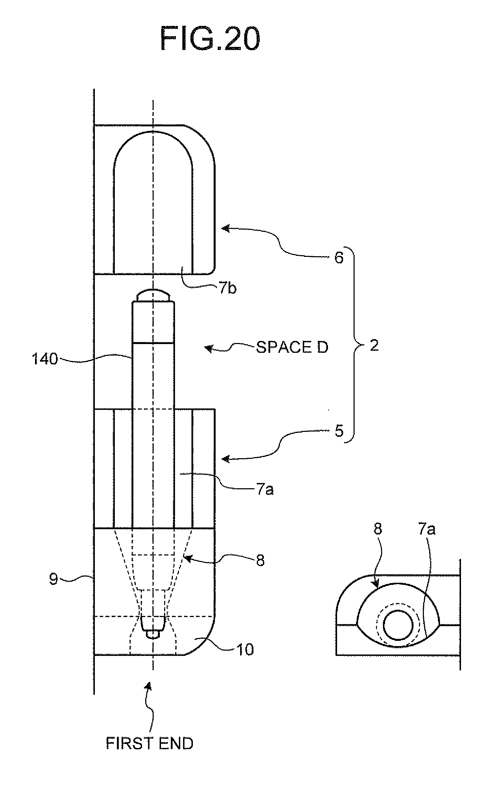

FIG. 20 is a diagram that illustrates, when viewed from the left side of FIG. 5, the state of the first member 2 and the pointing member 140 supported by the first member 2 in a standing manner in a state where the display unit 132 is placed in the portrait orientation (the state illustrated in FIG. 5) and that illustrates, when viewed from the right side of FIG. 4, the state of the first member 2 in a state where the display unit 132 is placed in the landscape orientation (the state illustrated in FIG. 4). In FIG. 20, the width of the hole 8 gradually becomes narrower as the position of the hole 8 in the direction toward the first end (downward in FIG. 20) comes closer to the first end and then gradually becomes wider as it comes closer to the first end. As the hole 8 has the structure such that it passes through the housing section 9 toward the first end, it is possible to discharge dust, which enters from above the second member 5, to outside through the hole 8 when the first member 2 serves as a stylus stand; thus, it is possible to prevent dust from storing in the second member 5. Moreover, the width of the hole 8 gradually becomes narrower as the position of the hole 8 in the direction toward the first end (downward in FIG. 20) comes closer to the first end and then gradually becomes wider as it comes closer to the first end; thus, the space in the hole 8 for storing the end of the pointing member 140 can be larger and the end of the stored pointing member 140 can be provided with more degree of freedom. Thus, it is possible to withdraw the pointing member 140 without always pulling out the pointing member 140 right above, and the convenience of users can be improved.

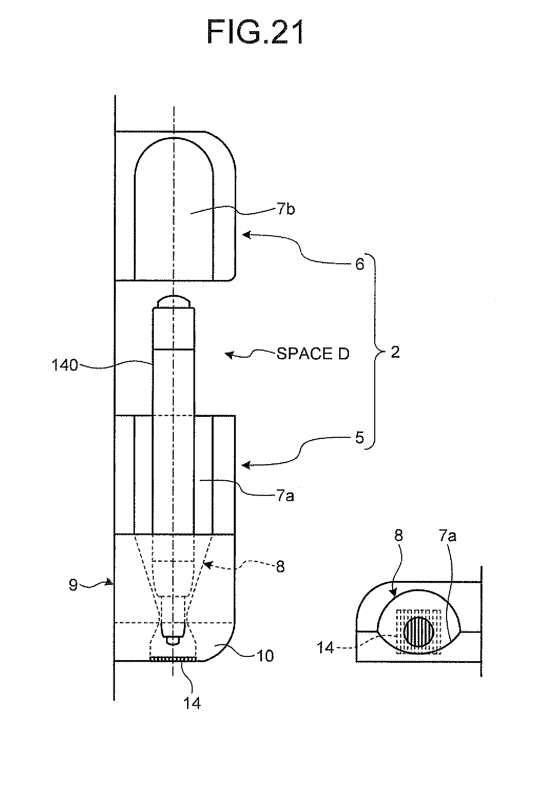

In another configuration, the hole 8 that passes through the housing section 9 toward the first end has a slit structure. For example, the first member 2 may have the structure illustrated in FIG. 21. The structure illustrated in the example of FIG. 21 is different from that illustrated in FIG. 20 in that a plurality of slits 14 is formed at the end of the hole 8 (the opening on the lower side of the hole 8). In the example of FIG. 21, the shape of the opening on the lower side of the hole 8 is rectangular. With this configuration, when the first member 2 serves as a stylus stand, it is possible to discharge dust, which enters from above the second member 5, to outside through the opening with the slits 14 formed thereon; thus, it is possible to prevent dust from storing in the second member 5.

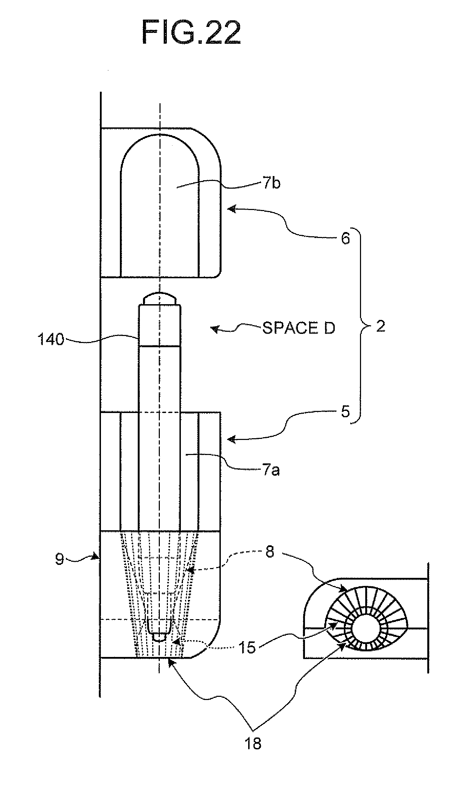

Furthermore, the first member 2 may have the structure illustrated in FIG. 22. The structure in the example of FIG. 22 is different from those illustrated in FIGS. 20 and 21 in that multiple slits 15 extend toward the opening 18 on the lower side of the hole 8 and are formed on the circumferential entirety of the hole 8. With this configuration, when the first member 2 serves as a stylus stand, it is possible to discharge dust, which enters from above the second member 5, to outside from the opening 18 through the slits 15; thus, it is possible to prevent dust from storing in the second member 5.

### Modification 6

In the above embodiment and the above modifications, an explanation is given of a case where the display device 130 is applied to the electronic information board 100, the display device 130 including the above-described first member 2 and the display unit 132 to which the first member 2 is secured; however, this is not a limitation and the display device according to the present invention may be used in any types of electronic devices. For example, a configuration may be such that an image forming apparatus (image forming system), such as a printer or multifunction peripheral, has the display device that includes the above-described first member and the display unit to which the first member can be secured and of which the orientation of the screen can be changed. That is, the scope of the present invention includes any electronic devices that are capable of having the display device that includes the above-described first member and the display unit to which the first member can be secured and of which the orientation of the screen can be changed.

According to the embodiments, it is possible to improve the convenience of users.

## Claims

1. A display device (130) comprising:
a display unit (132) having a screen whose orientation is variable;
a first member (2) configured to have a pointing member (140) placed thereon or support the pointing member (140) in a standing manner, the pointing member (140) being used for pointing a coordinate on the display unit (132), the first member (2) having a placement surface (7a, 7b) where the pointing member (140) is placed, the first member (2) being secured to the display unit (132); and
a housing section (9) configured to house an end of the pointing member (140) moving downward along the placement surface (7a, 7b) tilted when the display unit (132) is rotated in a state where the pointing member (140) is placed on the placement surface (7a, 7b) so that the orientation of the screen is changed, the housing section (9) being provided at a first end of the first member (2) facing downward when the display unit (132) is rotated, wherein
the housing section (9) has a hole (8) formed therein so that the end of the pointing member (140) is inserted through the hole (8), **characterized in that**
the hole (8) has a structure such that the hole (8) passes through the housing section (9) toward the first end, wherein the width of the hole (8) gradually becomes narrower as a position of the hole (8) in a direction toward the first end comes closer to the first end and then gradually becomes wider as the hole (8) comes closer to the first end.

2. The display device (130) according to claim 1, wherein
the hole (8) has a width that becomes narrower as a position of the hole (8) comes closer to the first end so that the width of the hole (8) at a position where the width of the hole (8) becomes narrowest indicates a value that is between a value of a width of the end of the pointing member (140) and a value of a width of a middle section of the pointing member (140).

3. The display device (130) according to claim 1 or 2, wherein
the placement surface (7a, 7b) is formed such that the placement surface (7a, 7b) slopes downward toward a middle section of the placement surface (7a, 7b) in a direction that intersects with a direction along which the pointing member (140) is placed on the placement surface (7a, 7b) and extends thereon.

4. The display device (130) according to any one of claims 1 to 3, wherein
the first member (2) includes
a second member (5) having a first placement surface (7a, 7b) where the end of the pointing member (140) is placed, the housing section (9) being provided in the second member (5), and
a third member (6) having a second placement surface (7a, 7b) where another end of the pointing member (140) is placed, and
a space (D) is provided between the second member (5) and the third member (6) have to hold the pointing member (140).

5. The display device (130) according to claim 1, wherein
the width of the hole (8) becomes narrower towards the first end of the first member (2) by making only the side of the hole (8) which is opposite to the placement surface (7a) narrower such that the pointing member (140) stands in a tilted manner with respect to the placement surface (7a).

6. The display device (130) according to claim 4, wherein
each of a portion of the second member (5) facing the space (D) and a portion of the third member (6) facing the space (D) has a shape (13) that makes the space (D) larger toward a front side of the display unit (132).

7. The display device (130) according to any one of claims 1 to 6, wherein the hole (8) has a slit structure (14; 15).

8. An electronic information board (100) comprising:
a coordinate detection device (120) configured to detect a positional coordinate of the pointing member (140) on the display device (130) according to any one of claims 1 to 7, the display device (130) being secured to the coordinate detection device (120); and
an information processing apparatus configured to perform processing in accordance with a coordinate detected by the coordinate detection device.

9. An electronic device comprising the display device (130) according to any one of claims 1 to 7.

## Patentansprüche

1. Ein Anzeigegerät (130) aufweisend:
eine Anzeigeeinheit (132) mit einem Bildschirm, dessen Ausrichtung variabel ist;
ein erstes Teil (2), das dazu eingerichtet ist, eine Zeigeeinrichtung (140) darauf platziert zu haben oder die Zeigeeinrichtung (140) in stehender Art und Weise zu stützen, wobei die Zeigeeinrichtung (140) dazu verwendet wird, auf eine Koordinate auf der Anzeigeeinheit (132) zu zeigen, wobei das erste Teil (2) eine Ablageoberfläche (7a, 7b) hat, wo die Zeigeeinrichtung (140) platziert wird, und das erste Teil (2) an der Anzeigeeinheit (132) festgemacht ist; und
eine Gehäusesektion (9), die dazu eingerichtet ist, ein Ende der Zeigeeinrichtung (140) aufzunehmen, die sich entlang der Ablageoberfläche (7a, 7b) nach unten bewegt, welche sich neigt, wenn die Anzeigeeinheit (132) gedreht wird in einem Zustand, in dem die Zeigeeinrichtung (140) auf der Ablageoberfläche (7a, 7b) platziert ist, sodass die Orientierung des Bildschirms geändert wird, wobei die Gehäusesektion (9) an einem ersten Ende des ersten Teils (2) angeordnet ist, nach unten weisend, wenndie Anzeigeeinheit (132) gedreht ist, wobei
die Gehäusesektion (9) ein darin ausgebildetes Loch (8) hat, sodass das Ende der Zeigeeinrichtung (140) durch das Loch (8) eingeführt ist, **dadurch gekennzeichnet, dass**
das Loch (8) eine Struktur hat, sodass sich das Loch (8) in Richtung des ersten Endes durch die Gehäusesektion (9) erstreckt, wobei der Querschnitt des Lochs (8) graduell enger wird, während Position des Lochs (8) in einer Richtung auf das erste Ende zu näher an das erste Ende kommt, und dann graduell weiter wird, während das Loch (8) näher an das erste Ende kommt.

2. Das Anzeigegerät (130) nach Anspruch 1, wobei
das Loch (8) einen Querschnitt hat, der enger wird, während sich eine Position des Lochs (8) dem ersten Ende nähert, sodass der Querschnitt des Lochs (8) an einer Position, an der der Querschnitt des Lochs (8) am engsten wird, einen Wert bezeichnet, der zwischen einem Wert eines Querschnitts des Endes der Zeigeeinrichtung (140) und einem Wert eines Querschnitts eines Mittelteils der Zeigeeinrichtung (140) ist.

3. Das Anzeigegerät (130) nach Anspruch 1 oder 2, wobei
die Ablageoberfläche (7a, 7b) so gebildet ist, dass die Ablageoberfläche (7a, 7b) abfällt in Richtung eines Mittelteils der Ablageoberfläche (7a, 7b) in einer Richtung, die sich schneidet mit einer Richtung entlang der die Zeigeeinrichtung (140) auf der Ablageoberfläche (7a, 7b) platziert ist und sich darauf erstreckt.

4. Das Anzeigegerät (130) nach einem der Ansprüche 1 bis 3, wobei
das erste Teil (2) enthält:
ein zweites Teil (5) mit einer ersten Ablageoberfläche (7a, 7b), auf der das Ende der Zeigeeinrichtung (140) platziert wird, wobei die Gehäusesektion (9) in dem zweiten Teil (5) vorgesehen ist, und
ein drittes Teil (6) mit einer zweiten Ablageoberfläche (7a, 7b), auf der ein anderes Ende der Zeigeeinrichtung (140) platziert wird, und
eine Aussparung (D) vorgesehen ist zwischen dem zweiten Teil (5) und dem dritten Teil (6), um die Zeigeeinrichtung (140) zu halten.

5. Das Anzeigegerät (130) nach Anspruch 1, wobei
der Querschnitt des Lochs (8) enger wird in Richtung des ersten Endes des ersten Teils (2), indem nur die Seite des Lochs (8), die gegenüber der Ablageoberfläche (7a) ist, enger gemacht wird, sodass die Zeigeeinrichtung (140) in schräger Art und Weise bezogen auf die Ablageoberfläche (7a) steht.

6. Das Anzeigegerät (130) nach Anspruch 4, wobei
jedes aus einem Teil des zweiten Teils (5), der der Aussparung (D) zugewandt ist, und einem Teil des dritten Teils (6), der der Aussparung (D) zugewandt ist, eine Form (13) hat, das die Aussparung (D) größer macht in Richtung einer Vorderseite der Anzeigeeinheit (132).

7. Das Anzeigegerät (130) nach einem der Ansprüche 1 bis 6, wobei das Loch (8) eine Schlitzstruktur (14; 15) hat.

8. Eine elektronische Informationstafel (100), aufweisend:
ein Koordinaten-Detektionsgerät (120), das dazu eingerichtet ist, eine Positionskoordinate der Zeigeeinrichtung (140) auf dem Anzeigegerät (130) nach einem der Ansprüche 1 bis 7 zu detektieren, wobei das Anzeigegerät (130) an dem Koordinaten-Detektionsgerät (120) befestigt ist; und
ein Informationsverarbeitungsgerät, das dazu eingerichtet ist, eine Verarbeitung gemäß einer Koordinate detektiert durch das Koordinaten-Detektionsgerät durchzuführen.

9. Ein elektronisches Gerät aufweisend das Anzeigegerät (130) nach einem der Ansprüche 1 bis 7.

## Revendications

1. Dispositif d'affichage (130) comprenant :
une unité d'affichage (132) ayant un écran dont l'orientation est variable ;
un premier élément (2) configuré pour avoir un élément de pointage (140) placé sur ce dernier ou supporter l'élément de pointage (140) d'une manière droite, l'élément de pointage (140) étant utilisé pour pointer une coordonnée sur l'unité d'affichage (132), le premier élément (2) ayant une surface de placement (7a, 7b) où l'élément de pointage (140) est placé, le premier élément (2) étant fixé sur l'unité d'affichage (132) ; et
une section de logement (9) configurée pour loger une extrémité de l'élément de pointage (140) se déplaçant vers le bas le long de la surface de placement (7a, 7b) inclinée lorsque l'unité d'affichage (132) est pivotée dans un état dans lequel l'élément de pointage (140) est placé sur la surface de placement (7a, 7b) de sorte que l'orientation de l'écran est modifiée, la section de logement (9) étant prévue au niveau d'une première extrémité du premier élément (2) orientée vers le bas lorsque l'unité d'affichage (132) est pivotée, dans lequel
la section de logement (9) a un trou (8) formé à l'intérieur de cette dernière de sorte que l'extrémité de l'élément de pointage (140) est insérée à travers le trou (8), **caractérisé en ce que**
le trou (8) a une structure de sorte que le trou (8) passe à travers la section de logement (9) vers la première extrémité, dans lequel la largeur du trou (8) se rétrécit progressivement au fur et à mesure que la position du trou (8) dans une direction vers la première extrémité se rapproche de la première extrémité et s'élargit progressivement au fur et à mesure que le trou (8) se rapproche de la première extrémité.

2. Dispositif d'affichage (130) selon la revendication 1, dans lequel
le trou (8) a une largeur qui se rétrécit au fur et à mesure qu'une position du trou (8) se rapproche de la première extrémité, de sorte que la largeur du trou (8) dans une position dans laquelle la largeur du trou (8) est la plus étroite, indique une valeur qui est comprise entre une valeur d'une largeur de l'extrémité de l'élément de pointage (140) et une valeur de la largeur d'une section centrale de l'élément de pointage (140).

3. Dispositif d'affichage (130) selon la revendication 1 ou 2, dans lequel
la surface de placement (7a, 7b) est formée de sorte que la surface de placement (7a, 7b) s'incline vers le bas, vers une section centrale de la surface de placement (7a, 7b) dans une direction qui coupe une direction le long de laquelle l'élément de pointage (140) est placé sur la surface de placement (7a, 7b) et s'étend sur ce dernier.

4. Dispositif d'affichage (130) selon l'une quelconque des revendications 1 à 3, dans lequel
le premier élément (2) comprend
un deuxième élément (5) ayant une première surface de placement (7a, 7b) où l'extrémité de l'élément de pointage (140) est placée, la section de logement (9) étant prévue dans le deuxième élément (5), et
un troisième élément (6) ayant une seconde surface de placement (7a, 7b) où une autre extrémité de l'élément de pointage (140) est placée, et
un espace (D) est prévu entre le deuxième élément (5) et le troisième élément (6) pour maintenir l'élément de pointage (140).

5. Dispositif d'affichage (130) selon la revendication 1, dans lequel
la largeur du trou (8) se rétrécit vers la première extrémité du premier élément (2) en rendant uniquement le côté du trou (8) qui est opposé à la surface de placement (7a) plus étroit, de sorte que l'élément de pointage (140) est positionné d'une manière inclinée par rapport à la surface de placement (7a).

6. Dispositif d'affichage (130) selon la revendication 4, dans lequel
chacune parmi une partie du deuxième élément (5) faisant face à l'espace (D) et une partie de troisième élément (6) faisant face à l'espace (D) a une forme (13) qui rend l'espace (D) plus grand vers un côté avant de l'unité d'affichage (132).

7. Dispositif d'affichage (130) selon l'une quelconque des revendications 1 à 6, dans lequel le trou (8) a une structure fendue (14 ; 15).

8. Tableau d'informations électroniques (100) comprenant :
un dispositif de détection de coordonnée (120) configuré pour détecter une coordonnée de position de l'élément de pointage (140) sur le dispositif d'affichage (130) selon l'une quelconque des revendications 1 à 7, le dispositif d'affichage (130) étant fixé sur le dispositif de détection de coordonnée (120) ; et
un appareil de traitement d'information configuré pour réaliser le traitement selon une coordonnée détectée par le dispositif de détection de coordonnées.

9. Dispositif électronique comprenant le dispositif d'affichage (130) selon l'une quelconque des revendications 1 à 7.
